Europäisches Patentamt

European Patent Office

Office européen des brevets

(19)

(11) Publication number : **0 474 455 A2**

(12) **EUROPEAN PATENT APPLICATION**

(21) Application number : **91308044.6**

(22) Date of filing : **03.09.91**

(51) Int. Cl.⁵ : **B23K 20/12**

(30) Priority : **04.09.90 GB 9019292**
**03.12.90 GB 9026274**
**23.05.91 GB 9111106**

(43) Date of publication of application :
**11.03.92 Bulletin 92/11**

(84) Designated Contracting States :
**AT BE CH DE DK ES FR GB GR IT LI LU NL SE**

(71) Applicant : **THE WELDING INSTITUTE**
**Abington Hall**
**Abington Cambridge CB1 6AL (GB)**

(72) Inventor : **Thomas, Wayne Morris**
**6 Hove Road**
**Haverhill, Suffolk CB9 9NJ (GB)**
Inventor : **Nicholas, Edward David**
**106 Abbotts Road**
**Haverhill, Suffolk CB9 0DH (GB)**
Inventor : **Needham, James Christopher**
**5 Blacklands Close, Saffron Walden**
**Essex (GB)**
Inventor : **Searle, John Gilbert**
**69 Stafford Lane**
**Hednesford, Staffordshire WS12 5LL (GB)**

(74) Representative : **Skone James, Robert**
**Edmund et al**
**GILL JENNINGS & EVERY 53-64 Chancery**
**Lane**
**London WC2A 1HN (GB)**

(54) **Friction surfacing.**

(57)    A method of friction surfacing in which relative movement is caused between a consumable (5) and the surface of a substrate (6) which are urged together while undergoing heat-generating movement whereby material of the consumable is caused to be laid down on a surface of the substrate. The consumable (5) is offered to the substrate (6) in such a manner that the urging action and relative transverse movement are caused by applying force in a single or opposed directions.

Fig. 1.

EP 0 474 455 A2

This invention relates to friction surfacing of materials in which a consumable bar or rod is applied in relative motion, either oscillatory (eg linear or orbital) or rotary, with respect to a substrate on to which the material of the consumable is deposited. The consumable is subject to an applied load and subsequently the material becomes bonded (welded) to the substrate via a plasticized layer which is developed due to the relative motion under the applied load.

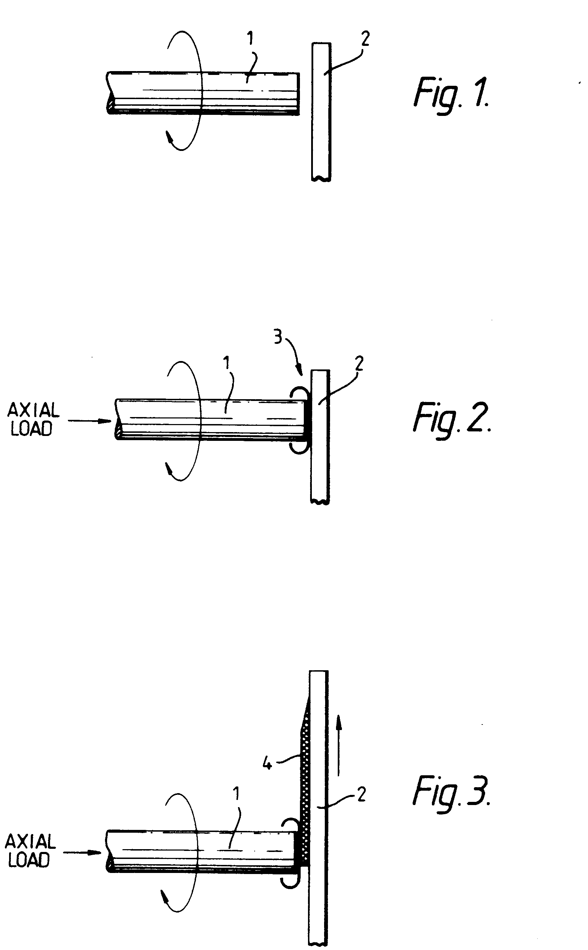

A typical friction surfacing process is shown in Figures 1 to 3 in which a consumable rod 1 is rotated at a sufficient speed and brought into contact with a substrate 2 (Figure 1) onto which the consumable material is deposited. Initially after contact a plasticized layer 3 of material is formed between the rotating rod and the substrate (Figure 2), in which rapid shear is taking place and which is maintained at a temperature lower than melting point due to the mechanical work expended. Once the plastic intermediate layer 3 has been formed the substrate 2 can be traversed across the end of the rotating rod 1 while maintaining an applied load (Figure 3) so as to cause plasticized material to be deposited 4 and generally bonded to the substrate 1. A collar or flash also develops on the consumable 1 as part of the plasticized material is displaced under the combined action of applied load and relative motion. Under the conditions of operation the consumable bar is advanced towards the substrate as it is being deposited, and forming a flash, as a result of the applied load in a manner analogous to conventional friction welding. Alternatively, the consumable bar while rotating may also be fed forward at a fixed rate, for example by means of a screw mechanism or, alternatively, by means of a ram in which the fluid flow is controlled. This arrangement has also been used in conventional friction welding where it is noted that the actual applied load is then not an independent variable but is a function of the rate of advance.

In accordance with one aspect of the present invention, a method of friction surfacing in which relative movement is caused between a consumable and the surface of a substrate which are urged together while undergoing heat-generating movement whereby material of the consumable is caused to be laid down on a surface of the substrate is characterized in that the consumable is offered to the substrate in such a manner that the urging action and relative movement are caused by applying force in a single or opposed directions.

Typically one of the consumable and substrate is held stationary while the other has the force although opposed forces applied to both is also possible. It is also possible for a screw action to be used.

In one application, the applied force causes the consumable and substrate to undergo a bodily relative traverse movement, the substrate surface extending at an angle to the traverse direction whereby the consumable and substrate are urged together. This has the advantage that the requirement to feed the consumable forward towards the substrate during friction surfacing is reduced or eliminated. In this case, typically an acute angle is defined between that part of the consumable contacting the substrate surface and the direction of relative movement between the consumable and the substrate.

The angle of the consumable is preferably adjustable with respect to the angle presented by the substrate surface. Thus the axis of the consumable may be normal to the surface of the substrate or set at some other angle with respect to the normal e.g. 3-6° or even up to 10°.

The rate of travel of the substrate with respect to the consumable is preferably a function of the relative motion of the consumable with respect to its axis, either rotary or oscillatory. Furthermore means may be adopted whereby the contact between the consumable and the substrate is initially dependant on a resilient member, either with respect to the consumable or with respect to some traverse means. After the initial contact period, when the plasticized interface is being developed, the applied load is then less than that which normally would develop in the absence of the resilient member. Generally the applied load is less than that which occurs during travel at a constant rate with the substrate at a defined angle with respect to the plane of the traverse.

The consumable may be a round bar or tube, performing motion about its axis or a rectangular bar. Typically, the relative motion includes a rotary, orbital or linear oscillatory motion.

In other applications, the consumable component is so shaped that, as the material from which it is formed is progressively consumed to form the layer, the remaining parts of the component progressively engage different parts of the substrate surface so that the surfacing material is applied progressively to those different parts of the substrate surface, without the need for bodily relative translational movement between the components.

The method is preferably carried out in the absence of bodily relative translational movement between the components, though the use of such relative translational movement does not fall outside the scope of the present invention.

The heat-generating relative movement between the components may be such as to require the movement of both components; alternatively one component may be held stationary while the other component is moved.

Any of a number of different modes of heat-generating relative movement may be employed. For example the relative movement may simply comprise relative rotation of the components, it may comprise relative reciprocatory movement along a rectilinear or a curved path, or it may comprise relative orbital movement, that is relative movement such that where the components engage each other each point on one component traces out a path such as a circle or oval on the other component while there is no bodily relative rotation of the components.

In accordance with a second aspect of the present invention, a consumable for use in a friction surfacing process comprises a hollow, cone shaped member formed of a material which can be deposited during a friction surfacing process.

The consumable preferably comprises at least one portion of uniform or substantially uniform thickness bounded by surfaces which are mutually parallel or substantially so but which are inclined to the surface of the substrate component to which the layer is to be applied from the consumable, so that as coating progresses the consumable component progressively engages different parts of the surface.

Typically, the consumable is a truncated cone, usually with a circular cross-section.

In all applications, the material of the consumable is preferably metallic; it may be homogenous or it may comprise a metallic matrix with particles embedded in it. The particles may themselves be metallic but of a different material from that of the matrix or they may be non-metallic, for example ceramic such as oxides, carbides or nitrides of metals. The consumable may comprise portions of different constitutions so that in use different portions of a layer formed from the consumable component are also of different constitutions. For example, initial and final portions of a metallic consumable may be homogeneous while an intermediate portion has particles embedded in it, the arrangement being such that initial and final portions of the layer, that is portions that are formed initially and finally, are of an homogeneous nature while an intermediate portion of the layer contains particles, the intermediate portion lying between the initial and final portions and being formed during a period between those periods when the initial and final portions are formed.

In other applications, the consumable could comprise a plastics material, such as a thermoplastics.

Embodiments of the present invention will now be described in more detail with reference to the accompanying drawings, these embodiments being given solely by way of example:-

Figures 1 to 3 illustrate different stages in the conventional friction surfacing process;

Figure 4 illustrates a first example of a method according to the invention;

Figure 5 shows the relative axial distance consumed with respect to the transverse distance for different angles of the substrate of the method shown in Figure 2;

Figure 6 illustrates a second example of a method according to the invention;

Figure 7 illustrates a third example of a method according to the present invention;

Figure 8 illustrates a fourth example of a method according to the invention;

Figures 9 and 10 illustrate different stages in a fifth example of the invention;

Figures 11 and 12 illustrate different stages in a sixth example of the invention;

Figures 13 and 14 illustrate different stages in a seventh example of the invention;

Figures 15 and 16 illustrate different stages in an eighth example of the invention;

Figures 17 to 19 illustrate different stages in a ninth example of the invention;

Figure 20 is a somewhat schematic section through a base component or substrate and two consumables and associated parts of apparatus for friction coating the base component, an initial stage being shown in full lines and a final stage in chain-dotted lines,

Figure 21 is a section through a device for use in the manufacture of consumables,

Figure 22 is a section through part of a consumable component of a different construction illustrating one stage in manufacture,

Figure 23 is a section through a completed consumable component incorporating the part shown in Figure 22,

Figure 24 is a section through a consumable component of another design,

Figure 25 is a front view of a layer of friction coating applied to a base component of the kind shown in Figure 20,

Figure 26 is a section through a consumable component of yet another design, this being suitable for producing the layer of friction coating shown in Figure 25,

Figure 27 is a section through a consumable component of a further design,

Figure 28 is a simplified perspective view of a base component and a consumable component for use in another method of friction coating, and

Figures 29 and 30 illustrate a method using a screw action.

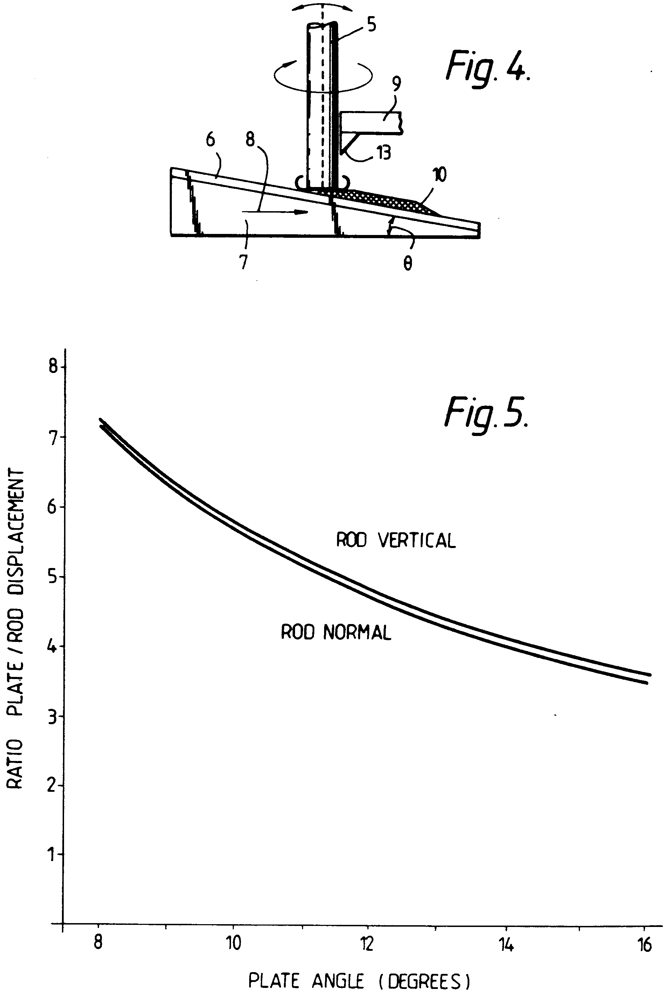

An example of a friction surfacing machine, or system according to the invention is shown in Figure 4 and comprises means (not shown) for rotating a consumable bar 5, together with means (not shown) for traversing a substrate 6 across the end of the consumable. The substrate 6 is set on a support 7 at a defined angle θ with respect to the direction of motion of the traverse 8.

The support 7 is moved in the direction 8 while the consumable rotates supported by an arbour reaction support 9 to offset or react the bending moment caused either by the traverse of the substrate across the end of the consumable and/or due to the deviation of the consumable axis from normal to the substrate surface. A deposit 10 is laid down on the substrate 6. No axial force needs to be applied to the consumable 5 since this is generated upon moving the substrate in the direction 8. A cutter 13 is mounted near the consumable end to control or machine the flash or collar being formed. Such cutters may conveniently be mounted on the support 9 used to react the bending moment.

The surface of the substrate 6 may be treated with an active agent to improve the bonding of the deposit from the plasticized layer onto the substrate. Furthermore, particularly for thin substrates, the substrate may be prebowed in a direction away from the surface to be covered in order to reduce the distortion or bending due to the deposited layer itself.

The axis of the consumable bar 5 can be set independently at an angle with respect to the normal to the plane of the substrate. The rate of axial shortening of the consumable bar during friction surfacing when vertical to the plane of traverse, Fig 4, is given by the tangent of the angle $\theta$ at which the substrate lies with respect to the plane of the traverse and the traverse rate. Figure 5 shows the relative axial distance consumed with respect to the traverse distance for different angles of the substrate. This data is substantially the same whether the consumable bar axis is vertical ie normal with respect the plane of the traverse, or normal with respect to the plane of the substrate.

Typically, the consumable bar 5 is initially advanced to contact the substrate 6, for example by advancing the rotating means carrying the consumable until contact is established. Thereafter the advancing means may be locked or set until the surfacing operation is completed.

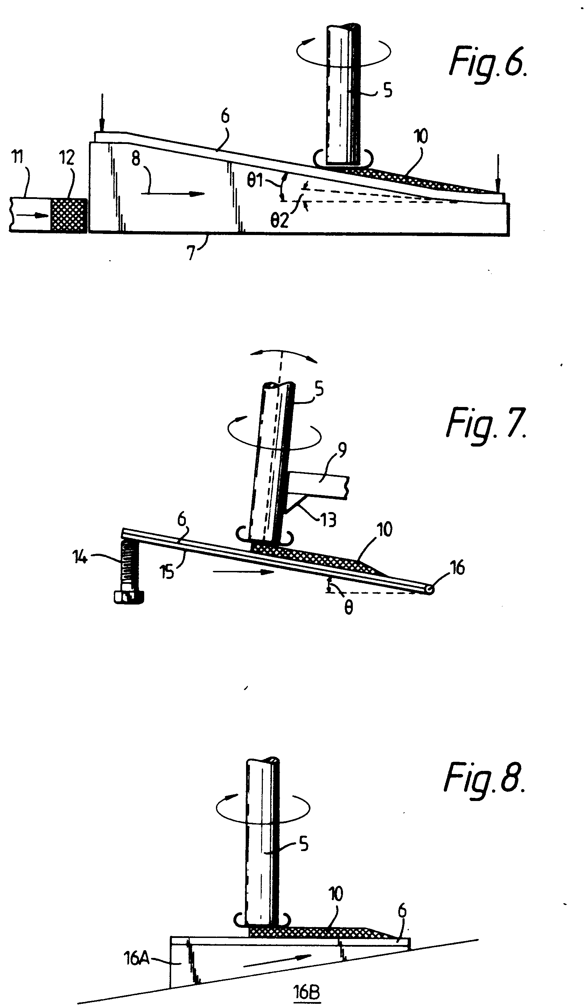

In other examples separate means for advancing the consumable bar 5 or its drive mechanism is avoided, and initial contact is caused by the traverse mechanism 11 bringing the angled substrate 6 into contact with the end of the consumable bar as shown in Fig 6. Preferably in this case the consumable bar 5 is not normal to the angle of the surface of the substrate, so that initial contact develops on an edge of the consumable rather than across its full face. Alternatively, or in addition, a resilient member 12 is inserted in the traverse mechanism so that initially when contact is established the resilient member 12 begins to compress and hence reduces the effective rate of traverse until the plasticized layer is sufficiently formed. Thereafter with the resilient member 12 fully compressed or compressed against a stop, the normal traverse rate is maintained and the substrate advances at a steady rate. Furthermore, particularly for thin substrates, the substrate may be bent to present a reduced angle $\theta 2$ (compared with the main inclination angle $\theta 1$) for the initial contact as shown by an initial ramp in Fig 6.

In the example of Figure 7, the axis of the consumable bar 5 is set at an intermediate angle between the normal to the plane of the traverse and the normal to the plane of the inclined substrate. This results in a reduced angle of deviation between the axis of the consumable 5 and the normal to the plane of the substrate 6. This also reduces the bending moment and hence the resultant load against the above support 9, Figure 4, compared with the consumable bar set vertical.

The angle of the axis of the consumable 5 with respect to the normal to the plane of the inclined substrate also affects the characteristics of the deposit 10 or the partition of the material deposited compared with the material forming the collar or flash. The operating angles may be changed after the initial touch down and start of the surfacing operation. Thus the angle of the inclined substrate may be increased after the initial start to generate a thicker deposit. The angle may be increased continuously while frictioning by means of a jack or screw 14 at one end of a plate 15 carrying the substrate the other end of which is hinged 16 to the traverse mechanism. The angle of the axis of the consumable bar can also be increased with respect to the normal to the substrate surface, which aids the deposition of a thicker layer.

In a yet further example (Figure 8), the traverse mechanism has an inclined base 16B with respect to the horizontal and a workpiece 16A having a horizontal surface carrying the substrate 6 so that the substrate lies substantially normal to the axis of the consumable 5. As previously, the operation of the traverse drive results not only in displacement of the substrate with respect to the consumable, but also raises it at a steady rate governed by the rate of traverse and corresponding angles of inclination.

The applications with an angled substrate or angled traverse are particularly suitable for straight runs on nominally flat plate or plates with a groove or recess. Equally, such surfacing runs may be made on the surface of a cylinder or round bar in the axial direction.

The consumable 5 could be solid or include particulate eg ceramic material.

In yet another arrangement, the traverse may be operated to and fro, so as to approach and retract from the consumable bar such that only a limited area is surfaced or a limited quantity of material laid down in one local spot. This may be repeated to produce a series of spots along one axis of the substrate. In a similar manner a series of spots may be made diagonally with index of the substrate in a direction normal to the direction of traverse. This approach may be used, for example, to tip a series of bars as used for machine tools. The bars are staggered to correspond to the index diagonal movement so that material is deposited nominally at the end of each bar with to and fro operation of the traverse mechanism carrying the inclined substrates.

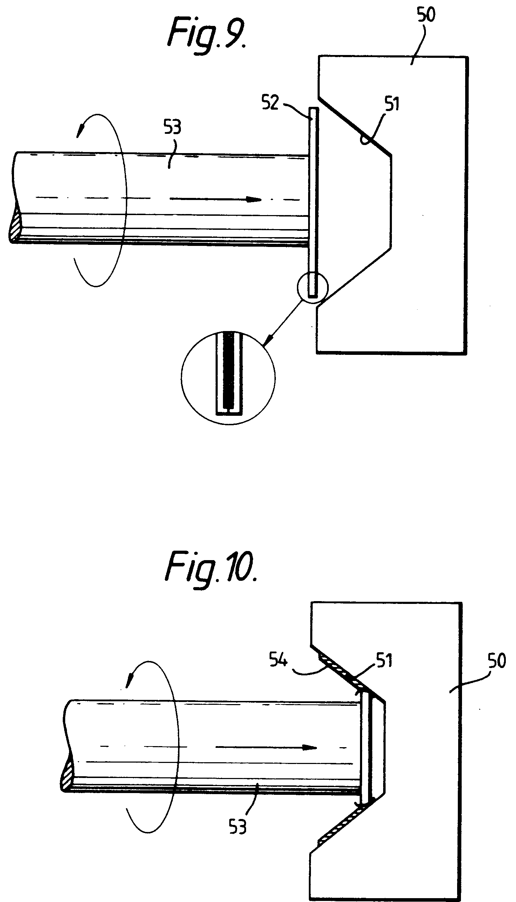

A further example (friction cladding) is illustrated in Figures 9 and 10 in which a substrate 50 has a conical recess 51 while the consumable member 52 is in the form of a disc mounted to a rotating member 53. When the rotating disc 52 and conical recess 51 are brought together under applied load, a layer 54 (Figure 10) of the disc material is deposited on the angled sides of the recess 51. In this arrangement the initial diameter of the disc 52 is equal or less than the diameter of the outer region of the recess 51 and similarly the diameter of the rotating support 53 is equal or less than the diameter of the inner zone of the recess.

As necessary, further support can be provided between the rotating bar and the disc to prevent excess bending during initial contact. Such support in general is removed as the recess is being clad. Alternatively the flat disc 52 may be in the form of a shallow taper, giving increased thickness in the vicinity of the rotating shaft and reduced thickness at the outer periphery. This taper also affects the amount of material deposited at the sides of the recess.

The two components are brought together either by forward axial movement of the disc in the direction shown or preferably by independent movement of the substrate in the reverse direction. Equally the substrate may be rotated about the axis of the recess or the relative motion preferably provided by the rotating bar as shown.

The consumable disc 52 may comprise a given material or alloy, or be composed of more than one material so that an appropriate alloy or composite is deposited on the inclined sides of the recess. In some applications a metal matrix composite (MMC) material can be deposited formed from metallic discs containing a suitable powder addition as illustrated.

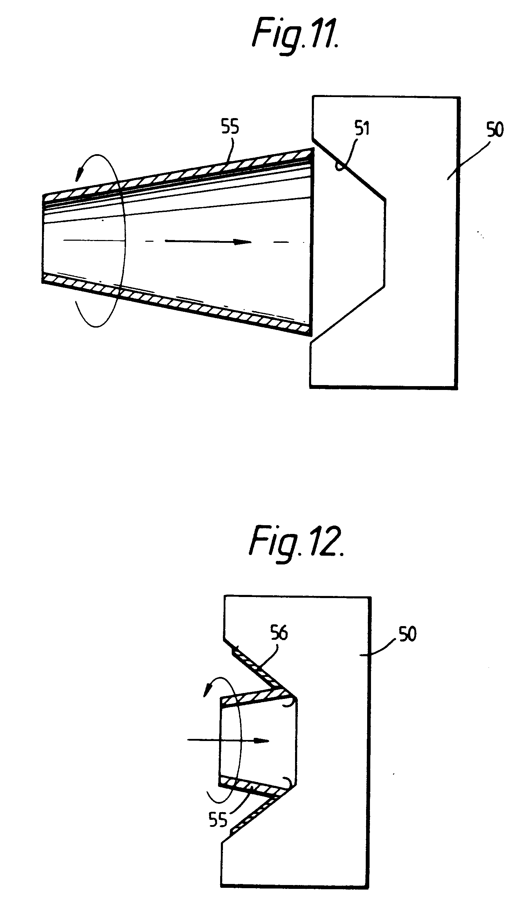

Figures 11 and 12 illustrate an alternative arrangement to that shown in Figures 9 and 10 in which the consumable material is in the form of a hollow cone 55 with a maximum diameter equal to or less than the outer diameter of the re-entrant conical recess 51. The two components 50, 55 are advanced towards each other while the cone 55 is rotated relative to the substrate 50. A layer 56 is deposited along the surface of the recess 51 (Figure 12).

Although the cone 55 has been shown in Figures 11 and 12 with a constant thickness, this could be varied and the cone may also be formed of more than one material to give a compound deposit. Means for supporting the cone and applying rotation are not shown for simplicity.

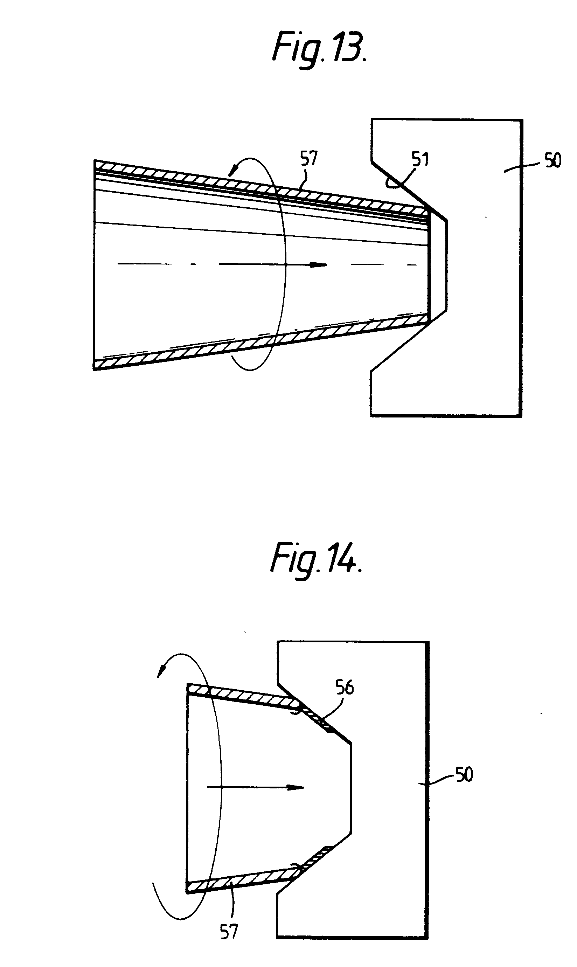

A modification of the Figure 11,12 example is shown in Figures 13 and 14. In this example, the taper of the cone 57 is reversed relative to the cone shown in Figures 11 and 12 so that upon rotation and application of axial force, a cladding layer 56 is formed on the surface of the recess 51 extending towards the outer diameter of the recess. Again, the cone 57 can comprise more than one material to give a compound deposit while the rotation and axial motion can be applied via the substrate 50 or the consumable cone 57 or both.

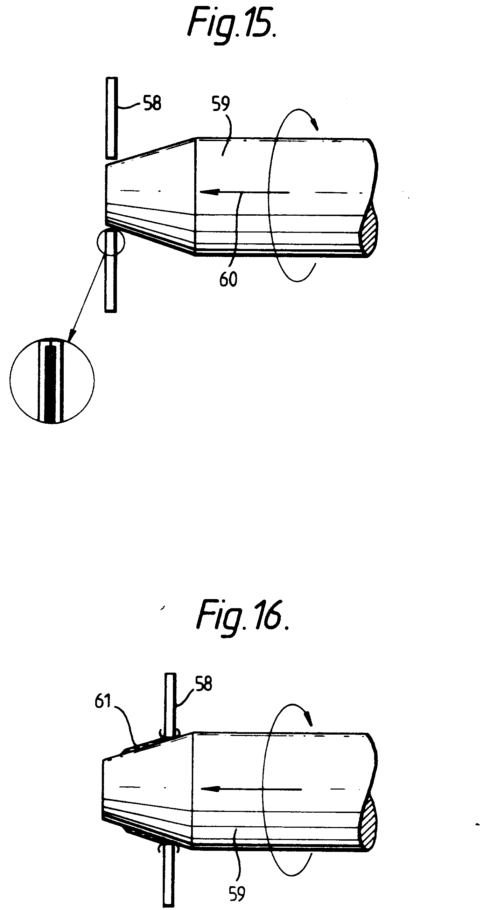

Figures 15 and 16 illustrate an example similar to the example of Figures 9 and 10 in which a flat disc consumable 58 is employed but with an external angled substrate 59 which may comprise, for example, a shaft with a tapered end. The internal diameter of the disc 58 is equal to or greater than the minimum diameter of the angled substrate 59 at its extremity. During relative rotation of the substrate 59 and disc 58 an axial force is applied in the direction of the arrow 60 so that the clad layer 61 (Figure 16) is laid down on the tapered surface of the substrate. The cladding process ceases when the flat disc 58 reaches the full diameter section of the substrate 59.

As previously the disc 58 may be supported on the side remote from the angled substrate 59 to react the applied load and bending moments. Such supports must be removed or increased in diameter as the angled substrate advances.

Either the disc 58 or preferably the angled substrate 59 may be rotated, and again either component advanced with respect to the other. Preferably, if not rotated, the consumable flat disc is advanced against the angled substrate. As previously the disc 58 may be made of metal or alloy or fabricated from different materials to provide a compound deposit.

The arrangements shown in Figures 9, 10 and 15, 16 may be utilised in developing plain bearings or wear surfaces with both radial and axial location to a shaft.

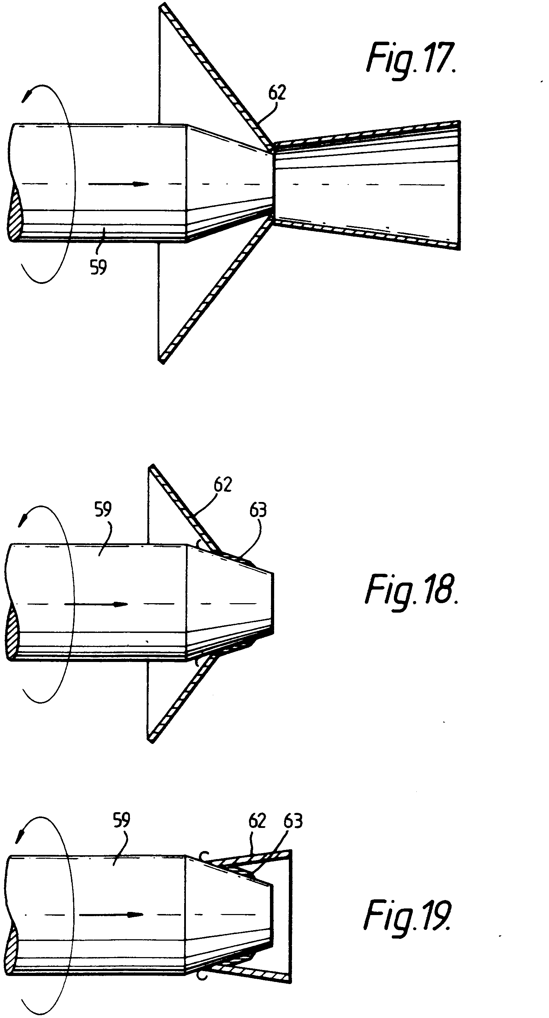

The example shown in Figures 17 to 19 is similar to that shown in Figures 15 and 16 but uses a conical consumable member 62 in place of the flat disc 58. As shown, a tapered end of the substrate 59 may be directed towards (Figure 18) or away (Figure 19) from the apex of the conical consumable 62. The amount of material 63 deposited is a function both of the angle of substrate and the angle formed by the conical consumable. As previously, either component can be rotated or provided with axial motion and the conical consumable can comprise more than one material and be provided with additional support as required.

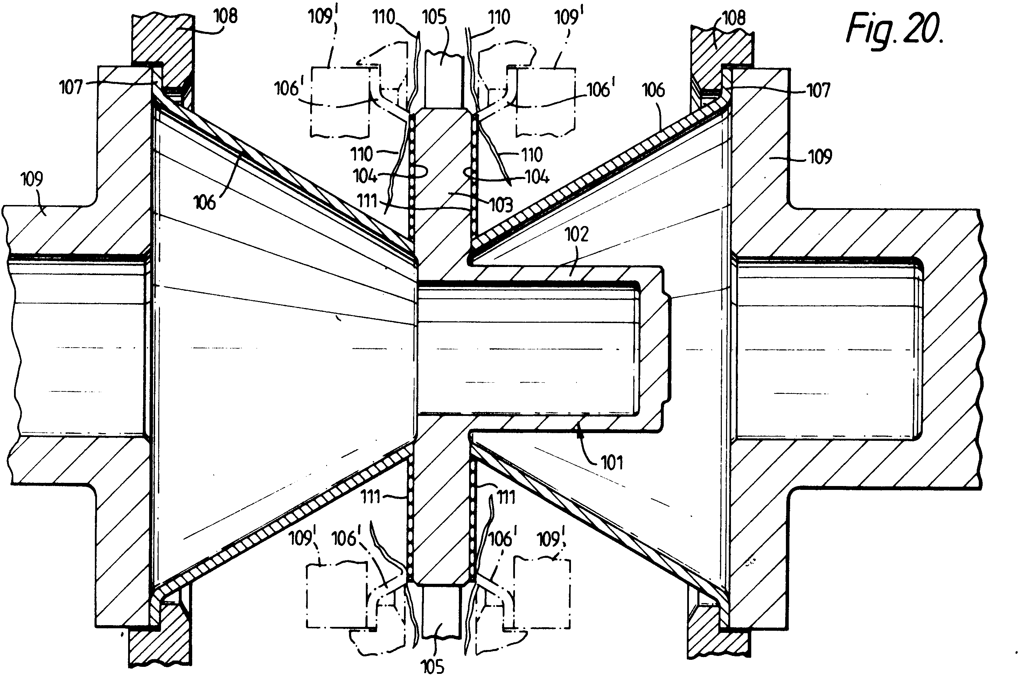

Figure 20 shows a base component or substrate 101 which is to constitute part of a disc brake. It is made from steel and comprises a cylindrical portion 102 which is closed at one end and is provided at the other with a flange 103 which constitutes the disc proper. Inner and outer margins of the disc are of reduced thickness, as illustrated, leaving annular surfaces 104 which face in opposite directions and are to be friction coated. The base component 101 is mounted in such a manner as to resist rotation. To this end the periphery of the disc is toothed or serrated and is held between the correspondingly shaped jaws 105 of a clamp. The clamp also prevents axial movement of the base component. Initially, inner parts of the surfaces 104 are engaged by end faces of frusto-conical consumable components 106 which are co-axial with the base component 101. Each of the consumable components 106 has an outwardly directed annular flange 107 at its broader end, that is the end further from the surfaces 104, which flange is clamped between a clamping ring 108 and an outer marginal part of a rotor 109. Variable speed electric motors (not shown) are provided to rotate the rotors 109 in opposite rotational senses so that in use the net torque frictionally applied to the base component 101 is substantially zero. Force-applying means (not shown) are provided to force the consumable components 106 into contact with the surfaces 104. Each force-applying means may comprise an hydraulic ram or other device which is operative to apply a force to the associated rotor but is not operative to control or determine the axial position of the rotor relative to the base component, the axial position being determined merely by the rate at which the consumable component is consumed. Alternatively, however, each force-applying means comprises a lead-screw or the like device which operates it such a manner that the axial position of the rotor relative to the base component is determined by the device at each stage of the process.

In use, the rotors 109 with their associated consumable components are rotated in opposite directions while they are forced towards the base component by the force-applying means. Frictional heat is generated between the base components 101 and each of the consumable components 106, the arrangement being such that the consumable component softens and forms a layer which becomes bonded to the base component in a manner resembling friction surfacing. As the layers are formed from the material of the consumable components 106, the rotors 109 move towards the base component and the faces of the consumable components that engage the base component are of progressively increasing diameter. The process is continued until the annular surfaces 104 are fully coated. Finally the force-applying means are rendered inoperative so that the remnants of the consumable components remain in fixed axial positions while continuing to rotate. After a while this causes the separation of the remnant from the layers that have been applied to the base component, that type of separation being a known phenomenon in the art of friction coating.

In the course of friction coating it is found that inner and outer strata of the consumable components tend not to form parts of the layer bonded to the base component but to be expelled laterally as flash of continuous-but-irregular shape. In Figure 20, the positions of the rotors during the final stages of the process are indicated by the chain-dotted lines 109′ and the remnants of the consumable components are indicated at 106′. The flash is indicated at 110 and the coating is indicated at 111.

It will be appreciated that during the process, the diameter of that part of the surfaces 104 being coated progressively increases. As it desirable to maintain a substantially fixed rate of heat-generating movement throughout the process, the speed of the drive motors is preferably reduced progressively during the process. It is convenient for the speed of each motor at any time to be controlled by the axial position of the associated rotor, suitable sensing means being provided to provide a control signal for the motor which is a function of that axial position. In addition it will be appreciated that as the process proceeds the area of each consumable component engaging the base component increases. As it is desirable to maintain a constant pressure for uniform heat-generation, it is preferred to increase the force applied by the associated force-applying means. Here again the force required is a function of the axial position of the associated rotor, and it is convenient for the force to be determined by that axial position, the control signal referred to above controlling the force applied.

A suitable rate of relative movement between the components and a suitable pressure exerted by one component on the other necessary to effect friction coating can readily be determined by simple experiment. When the components are wholly or largely of a metallic nature, it may well be that a suitable rate of relative movement between the components will fall within the ranges of from 0.5 to 1.5 m/s or 1.5 to 3.0 m/s, and that the pressure may be up to about 6 tons/sq.in (roughly up to 1000 kgf/cm).

If desired an annular step (not shown) may be provided on each of the rotors 109 the step projecting a short distance into the mouth of the associated consumable component 106 and locating that component so that it is coaxial with the rotor. An outer face of the step is preferably of frusto-conical shape so that it is engaged by the inside face of the consumable component. In use, when the force-applying means urges the associated rotor towards the base component, the consumable component tends to bear on the annular step so that the mouth of the component splays outwards and the flange 107 comes into tight abutment with the clamping ring 108, thus locating the component yet more firmly.

It is highly desirable to ensure that in use the consumable components do not rotate relative to the rotors. This can normally be achieved by providing a positive interlock between each consumable component and its associated rotor. This may take the form of a serrated periphery on the flange of the consumable component which engages a complementary serrated formation on the associated clamping ring on the rotor. Alternatively, or in addition, locating holes may be formed in the flange of the consumable component, the holes being entered by complementary pegs or the like on the associated rotor or clamping ring.

The consumable components may be made of metal such as a high-quality steel and may be formed as pressings. Such components are homogeneous. In a preferred method, however, each consumable component comprises a metal matrix containing particulate material. The particulate material is preferably hard and wear-resistant. The matrix may be of aluminium or steel and the particles are preferably harder than the matrix. Such materials will hereinafter be referred to as particle-bearing materials.

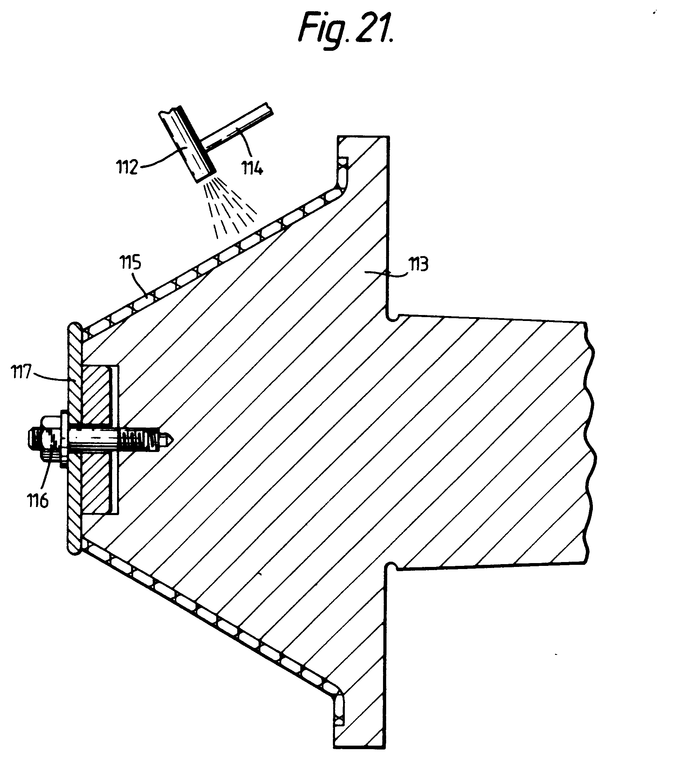

One method of making a consumable component of a particle-bearing material is illustrated in Figure 21. Metal is sprayed through a spray nozzle 112 onto the surface of a re-usable mandrel 113, particulate material being introduced into the nozzle through a lateral inlet tube 114. A consumable component 115 is thus built up and, when set, can be removed after an axial bolt 116 has been removed together with a retaining disc 117 which is normally held against the end of the mandrel by the bolt.

It is desirable that the consumable component should be of composite form and should have a core of particle-bearing material and inner and outer surface layers of homogeneous metallic material. In use, the coating on the base component is formed largely or wholly of the particle-bearing material of the core, while the flash is largely or wholly formed of the homogeneous outer surface layers.

In one method of making consumable component of composite form, a cylindrical element is formed by a centrifugal casting process. The element is formed of metal containing particulate material of a density greater than that of the metal so that the particles tend to concentrate near the outer surface of the element. After the element has been made it is secured within a metallic sleeve of cylindrical shape which so that the particles lie between two outer layers of metal that do not contain particles. The resulting assembly is then formed to the desired shape by a pressing operation. Alternatively, the particles are a density lighter than that of the metal, so that they concentrate near the inner surface of the centrifugally cast element, and a cylindrical metallic liner is secured within the element before the assembly is press-formed.

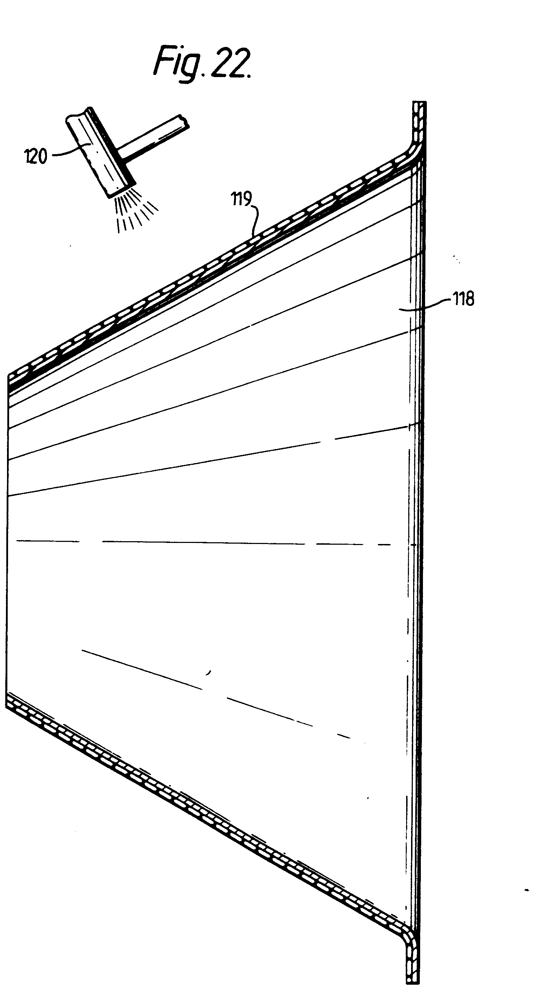

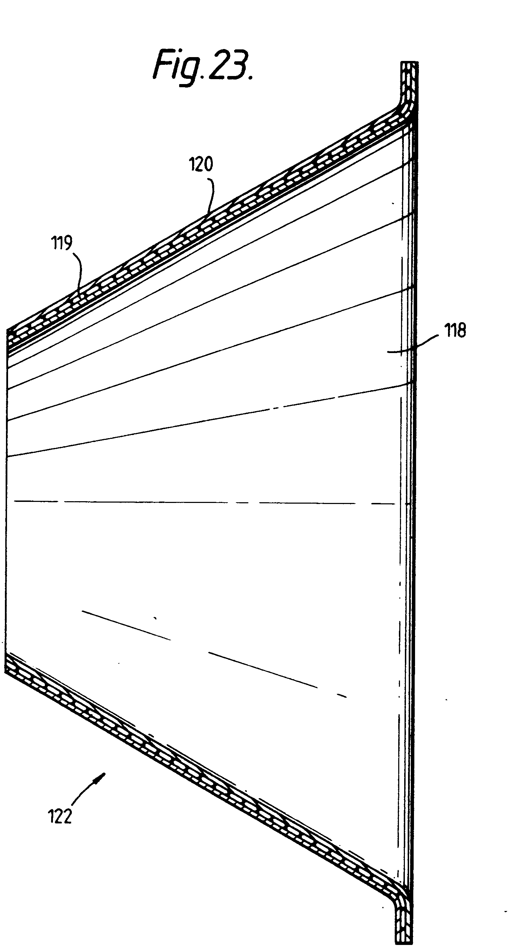

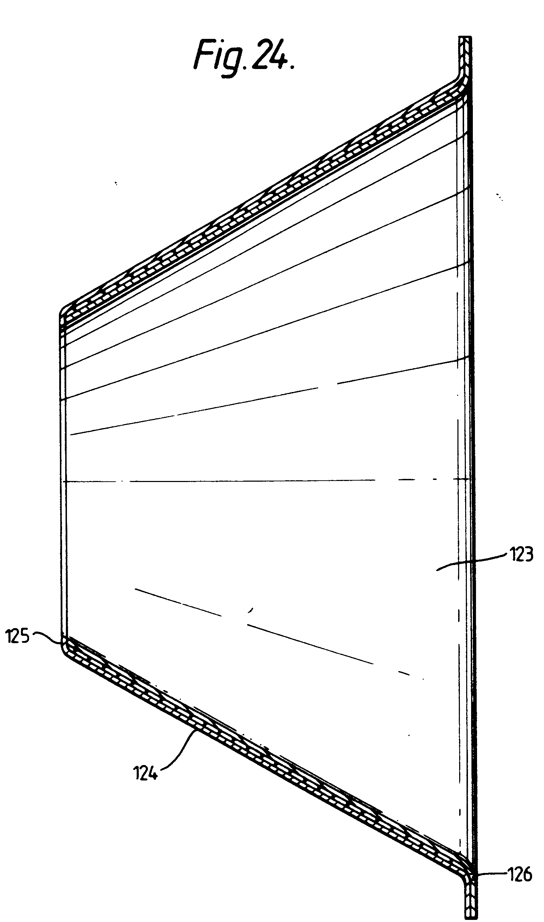

Another method of making a composite consumable component is illustrated in Figures 22 and 23. An inner metal shell 118 is formed as a pressing or by spinning and a core layer 119 of particulate-bearing material is sprayed onto its outer surface with the aid of a spray nozzle 120 which operates in the same manner as the nozzle 112/114. An outer shell, generally similar to the inner shell, is fitted over the core layer 119 and secured in place to form a composite component 122 as shown in Figure 23. In a modification illustrated in Figure 24 inner and outer shells 123 and 124 are assembled together as shown, the flanges at their broader ends being secured together and an inturned flange 125 at the narrower end of the outer shell 124 being secured to the inner shell 123. Particle-bearing material is injected into the cavity between the shells through a hole 126.

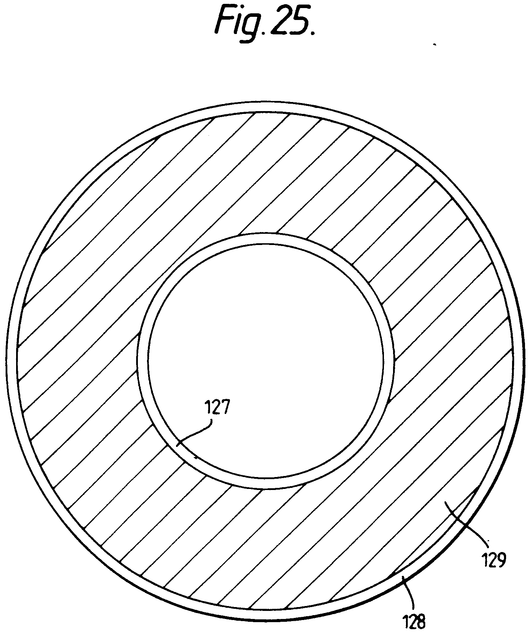

The consumable components can incorporate an additional improvement, namely the provision of initial and final portions which are of homogeneous metallic form and do not contain particles. In use, each consumable component forms, on one of the annular surfaces 104, a coating that is of the form illustrated in Figure 25. The initial and final portions of the consumable component form relatively narrow metallic bands of coating on the base component: an inner band 127 near the inner edge of the coating and outer band 128 near the outer edge thereof, the remainder of the coating 129, between those bands, being of particle-bearing material. The narrow metallic bands 127 and 128 extend to the edges of the annular surfaces 104, and after the friction coating process has been completed the edges of the coating are ground or machined off to provide neat edges which do not protrude axially or radially. The absence of particles at these edges assists in that operation.

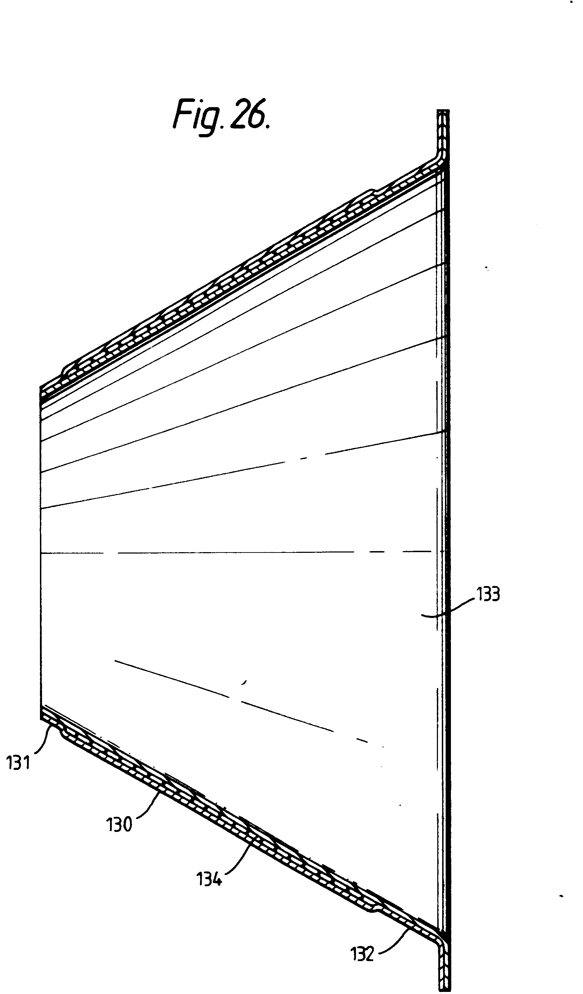

One form of consumable component for use in carrying out this additionally improved method is illustrated in Figure 26. This shows a component largely similar to that shown in Figure 24 but in which an outer shell 130 is so shaped that portions thereof, 131 and 132, respectively near the narrower and broader ends, directly engage an inner shell 133 so as to form initial and final portions of the component that are wholly metallic. The cavity between the shells, into which particle-bearing material 134 is injected, is therefore of reduced axial extent.

In another method of manufacture a frusto-conical body is made of metal with substantially uniform wall-thickness and blind holes are drilled into it extending from the narrower end thereof towards the broader end. The holes are then filled with particle-bearing material. If desired the mouth of each hole may be plugged with a metal plug so that the component has an initial portion which is wholly metallic. As the particle-containing holes splay outwards from the narrower end of the body, the proportion of particles to metal in the coating formed by the component decreases with increasing diameter. In order partially to compensate for that, additional blind holes, shorter than the first-mentioned holes, may be drilled into the body from the broader end thereof, each of the shorter holes extending part-way between two adjacent longer holes. These shorter holes are also filled with particle-bearing material and plugged with metallic plugs.

Each of the consumable bodies described above is of frusto-conical shape and is used in such a manner that it is consumed - that is it progressively provides material for a layer of coating - starting from the narrower end. It will be appreciated that the methods described may be modified in such a manner that a consumable body generally similar to any of those described above is consumed starting from the broader end thereof. This may sometimes be less satisfactory than the methods described above. One reason for this results from the fact that the force-applying means necessarily applies force to the narrower end of the consumable component so that the system is inherently rather less stable than that illustrated in Figure 20 (in which force is applied to the broader end of the consumable component) and there is likely to be a greater tendency for the axis of the consumable component to deviate from the axis of the rotor as the component is consumed. Another reason is that in using a consumable component of that design the force-applying means has to apply its maximum force initially.

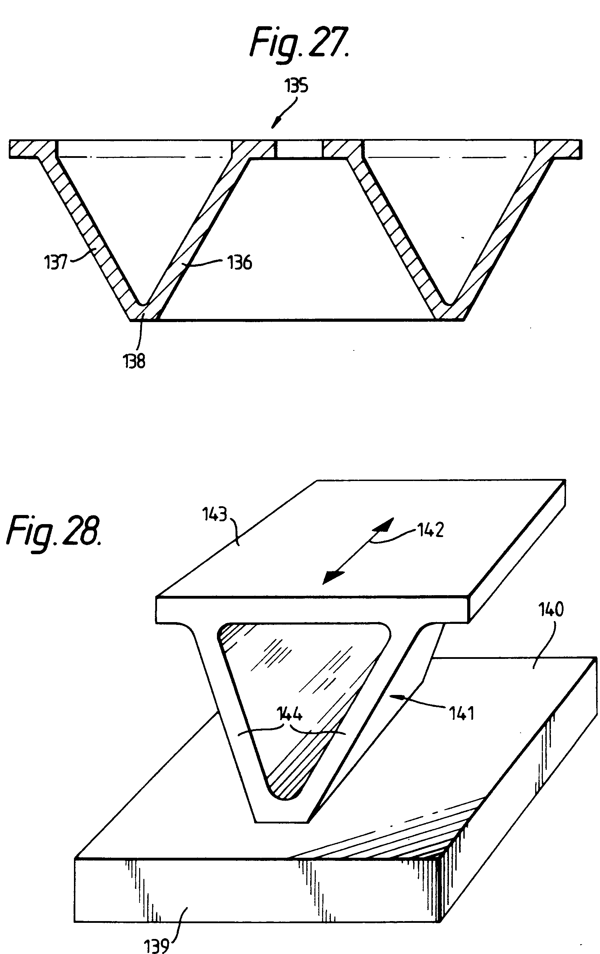

In a further modification, illustrated in Figure 27, a consumable component 135 is in the shape of two frusto-conical parts 136 and 137 of equal axial length and of the same cone-angle but of different sizes, the parts being disposed so that they are co-axial with each other but have their walls inclined to the axis in opposite directions, the smaller part 136 lying inside the larger part 137 and the broader end of the smaller part being attached to or integral with the narrower end of the larger part as indicated at 138.

Thus any section through the component, in a plane that contains the axis of the component, is in the shape of two letters V side by side.

While a component of that shape may be consumed from either end at will, it is preferably consumed from the narrower end, that is the end 38 where the inner and outer parts meet each other, this being the more stable arrangement. An advantage of using a consumable component of this shape is that the rate at which friction coating is effected is doubled; another is that the length of travel of the force-applying means is halved. Another advantage is that the force applied to the component by the force-applying means can remain constant as the total area of the consumable component engaging the base component remains substantially constant. In this connection it will be appreciated that in carrying out a coating operation using this type of consumable component a narrow central band of coating is formed first and then the band is progressively broadened both radially inwards and radially outwards, two concentric, circular faces of the consumable components engaging the base component; as one face increases in diameter the other face decreases in diameter so that the total area of the faces remains substantially constant.

That type of consumable component may be thought of as being in the shape of a disc with a single corrugation co-axial with the disc. It will be understood that other designs of consumable components may be in the shape of discs with two or more co-axial corrugations of different diameters. In general, however, such components are likely to be less satisfactory as there is less space into which the flash can move as friction coating progresses.

Consumable components of any of these different shapes may be made by methods generally similar to any of those described above but incorporating any modifications required because of the differences in shape.

In each of the methods described above by way of example the relative heat-generating movement between the consumable component and the base component is a rotational movement. This is normally satisfactory but if there is a slight local dip in one of annular surfaces that is to be coated it may happen that the coating fails to adhere satisfactorily to it. That difficulty may be overcome by employing a modified method in which frictional heat is generated by causing relative orbital movement between the base component and the consumable components. Suitable methods of generating relative such orbital movement are described in the specifications of British Patent Nos. 1 264 863, 1 273 250, 1 332 712; 1 385 471 and 1 414 454 and will not be further described here.

It will, of course, be understood that while it is often valuable to apply layers of coating material simultaneously to both annular faces 104 of a base component 101, particularly as it results in relatively rapid friction coating being effected and as the axial forces applied to the base component substantially balance each other, it is not essential for the faces to be coated simultaneously and they may be coated sequentially. Likewise, in each of the methods described above, in which frictional-heat is generated by relative rotation, the base component 101 is held stationary while the consumable component or each of the consumable components rotates. Again, this arrangement is preferred but is not essential and if desired the base component may be caused to rotate while the consumable component or each consumable component remains stationary or rotates in the opposite direction. When a layout is used in which the relative positions of the components is similar to that shown in Figure 20, however, it may be awkward to provide suitable rotational bearings for the base component as it is likely they will have to be disposed radially outside the periphery of the base component.

When any of the methods described above is used the layer or each layer of coating material applied to a base component is likely to have an outer surface that is formed with a pattern of shallow grooves circular or arcuate co-axial with the base component. This results from the fact that when friction coating is carried out it is usual for a film of coating material to soften and to be at least partially expelled from between the relatively moving components and for a slight delay to occur as the next part of the consumable component is heated sufficiently for a next film to be expelled, this effect being repeated throughout the friction coating process. It may therefore be necessary or desirable to machine or grind the completed layer of coating material to provide a flat surface or a substantially flat surface.

In each of the methods of friction coating described above the layer of coating material is of annular shape. Obviously a circular or disc-shaped layer may be formed by similar methods in which the consumable component extends to include a central portion.

The invention may also be used to form coatings of shapes other than annular or circular. In the formation of a coating of square or oblong rectangular shape, for example, use may be made of a method of the kind illustrated in Figure 28. This shows a base component 139 with a planar surface 140 which is to be friction coated. When friction coating is to be effected the base component 139 is held stationary and a consumable component 141 is caused to undertake linear reciprocation in the directions indicated by the arrow 142 while being pressed against the surface 140 by force-applying means (not shown). Reciprocation may, for example, be effected by apparatus of the kind described in GB-A-2 222 975. The consumable component 141 is of generally V-shaped cross-section, the broader end thereof having an integral bearing plate 143 which is parallel with the surface 140 and in use transmits to the consumable component the force applied by the force-applying means. During friction coating the consumable component is progressively consumed and material from it forms a coating on the surface 140.

While it is preferred to cause the reciprocation to occur in a direction parallel with the length of the consumable component this is not always essential, and reciprocation may be effected in any other direction, provided that the consumable component is strong enough. Alternatively the consumable component may be caused to perform orbital movement relative to the base component. It will be understood that in each instance the extent of the heat-generating movement is normally very considerably less than any of the major dimensions of the consumable component.

In each of the methods described in the last preceding paragraph the base component is held still while the consumable component is moved relative to it. It will be understood that in a modification of any of those methods both components may be moved to effect the desired relative movement or the consumable component may be restrained from heat-generating movement while that movement is effected by the base component.

The consumable component 141 may be of homogeneous metallic form or it may be made of a particle-bearing material. Preferably, however, each of the two inclined limbs 144 of the consumable component has a central layer of particle-bearing material and outer layers of metallic material containing no particles or fewer particles.

An alternative form of consumable component is of inverted V-shaped cross-section, the two inclined limbs thereof being joined to the bearing plate where they meet each other, and splaying apart from the bearing plate.

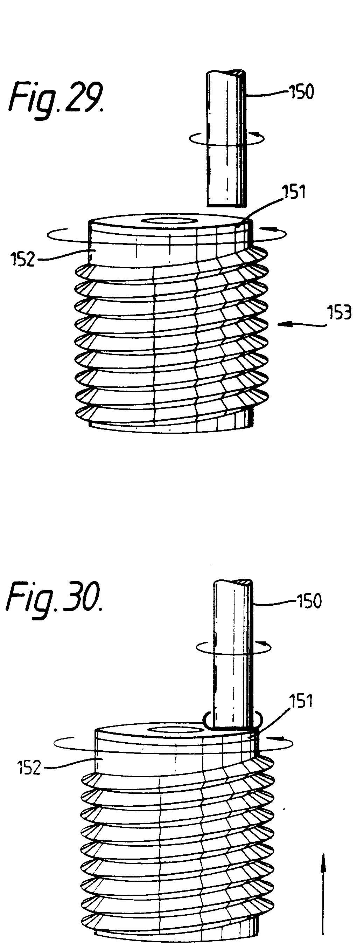

Figures 29 and 30 illustrate a further example in which the urging force between the consumable and substrate together with the relative traverse movement is achieved using a screw feed arrangement. In this case, the consumable 150 is initially positioned spaced above an annular substrate 151 supported on a cylindrical support 152 having an external screw thread 153 positioned within a multiple start screw feed system (not shown). Upon rotation of the cylinder 152, the cylinder moves out in the direction of the arrows shown in Figure 30 until the substrate 151 contacts the consumable 150. The consumable 150 is separately rotated to cause heat generation at the interface with substrate 151 and it will be seen that the screw feed movement not only causes the substrate and consumable to be urged together but also causes relative traverse movement between the two components so that a surface of the consumable material can be laid on the annular substrate. The axis of the consumable 150 may be normal to the substrate (as shown) or set at an appropriate angle as desired. It will be noted also that this technique can be used to provide a surface on the end of a tube.

## Claims

1. A method of friction surfacing in which relative movement is caused between a consumable and the surface of a substrate which are urged together while undergoing heat-generating movement whereby material of the consumable is caused to be laid down on a surface of the substrate characterized in that the consumable is offered to the substrate in such a manner that the urging action and relative movement are caused by applying force in a single or opposed directions.

2. A method according to claim 1, wherein one of the consumable and substrate is held stationary while a force is applied to the other.

3. A method according to claim 1 or claim 2, wherein the applied force causes the consumable and substrate to undergo a bodily relative traverse movement, the substrate surface extending at an angle to the traverse direction whereby the consumable and substrate are urged together.

4. A method according to claim 3, wherein the consumable is substantially normal to the relative traverse direction.

5. A method according to claim 3, wherein the consumable is substantially normal to the surface of the substrate.

6. A method according to any of claims 3 to 5, wherein the force is applied to the substrate, resilient means being positioned between the substrate and a force generator to reduce the relative traverse rate during an initial period.

7. A method according to any of claims 3 to 6, wherein the angle between the substrate and the consumable is varied during the friction surfacing process.

8. A method according to claim 7, wherein the angle is varied by raising the angle of the substrate relative to the direction of relative movement.

9. A method according to any of claims 3 to 8, wherein the relative traverse movement comprises a to and fro movement.

10. A method according to claim 1 or claim 2, wherein the consumable component is so shaped that, as the material from which it is formed is progressively consumed to form the layer, the remaining parts of the component progressively engage different parts of the substrate surface so that the surfacing material is applied progressively to those different parts of the substrate surface, without the need for bodily relative translational movement between the components.

11. A method according to claim 10, wherein one of the consumable and substrate has a conical form.

12. A method according to claim 11, wherein the substrate has a conical leading end which is received within a bore of the consumable.

13. A method according to claim 11, wherein the consumable has a conical form and the surface of the substrate against which the consumable is urged is substantially planar.

14. A method according to claim 11, wherein the consumable has a conical form and is received in a corresponding conical recess of the substrate.

15. A method according to claim 14, wherein the taper of the recess is opposite to the taper of the consumable.

16. A method according to any of the preceding claims, wherein the consumable is made of a metallic material.

17. A method according to any of the preceding claims, wherein the consumable includes particulate material, such as ceramic.

18. A method according to any of the preceding claims, wherein the consumable comprises portions of different constitutions.

19. A consumable for use in a friction surfacing process, the consumable comprising a hollow, cone shaped member formed of a material which can be deposited during a friction surfacing process.

20. A consumable according to claim 19, the consumable comprising at least one portion of uniform or substantially uniform thickness bounded by surfaces which are mutually parallel or substantially so but which are inclined to the surface of the substrate to which the layer is to be applied from the consumable, so that as coating progresses the consumable component progressively engages different parts of the surface.

21. A consumable according to claim 19 or claim 20, wherein the cone shaped member has a substantially circular cross-section.

22. A method according to any of claims 11 to 18 wherein the consumable is in accordance with any of claims 19 to 21.

23. A method according to any of claims 1 to 18 or 22, wherein the substrate comprises a brake-disc.

Fig. 1.

AXIAL LOAD

Fig. 2.

AXIAL LOAD

Fig. 3.

Fig. 4.

Fig.5.

ROD VERTICAL

ROD NORMAL

RATIO PLATE / ROD DISPLACEMENT

PLATE ANGLE (DEGREES)

*Fig.6.*

*Fig.7.*

*Fig.8.*

13

# Fig.9.

# Fig.10.

## Fig.11.

## Fig.12.

# Fig. 13.

# Fig. 14.

# Fig.15.

# Fig.16.

Fig.17.

62

59

Fig.18.

59    62    63

Fig.19.

59    62  63

Fig. 20.

# Fig. 21.

## Fig. 22.

# Fig.23.

# Fig.24.

Fig.25.

# Fig.26.

131

130

134

132

133

Fig.27.

135

137

136

138

Fig.28.

143

142

140

144

141

139

*Fig.29.*

150

151

152

153

*Fig.30.*

150

151

152